# EUROPEAN PATENT SPECIFICATION

(11) **EP 3 145 789 B1**
(45) Date of publication and mention of the grant of the patent: **10.07.2019**
(21) Application number: 15796742.3
(22) Date of filing: 19.05.2015
(51) Int. Cl.: B62D 1/184, B62D 1/183

(54) **ADJUSTABLE AND MECHANICALLY LOCKABLE STEERING COLUMN**
EINSTELLBARE UND MECHANISCH VERRIEGELBARE LENKSÄULE
COLONNE DE DIRECTION RÉGLABLE ET VERROUILLABLE MÉCANIQUEMENT

(30) Priority: 22.05.2014 SE 1450613
(43) Date of publication of application: 29.03.2017
(73) Proprietor: Scania CV AB, 151 87 Södertälje (SE)
(72) Inventor: NÄSLUND, Maria, S-151 45 Södertälje (SE); NIKLAS, Kjelleström, S-632 22 Eskilstuna (SE); SÖDERLUND, Jan, S-144 64 Rönninge (SE); GARBERG, Erik, S-442 74 Harestad (SE); SKEPPSTRÖM, Tomas, S-151 39 Södertälje (SE)
(74) Representative: Scania CV AB
(86) International application number: PCT/SE2015/050554
(87) International publication number: WO 2015/178829

(56) References cited:
- WO-A1-91/06461
- DE-A1-102010 013 522
- US-A- 4 449 419
- US-A- 4 449 419
- US-A1- 2007 252 372
- US-A1- 2007 252 372
- US-A1- 2008 257 097

## Description

### TECHNICAL AREA

The present invention concerns a steering column that can be adjusted in stepless adjustments for vehicles, principally intended for heavy commercial vehicles such as trucks. The invention concerns in particular steering columns that are provided with a lamellar package that holds the steering wheel at the desired and set position during normal use with the aid of friction. When the mechanical force across the steering column reaches an upper limiting value, such as, for example, in the event of an accident, it is desirable that the steering column is fixed at the preset angle, with the aid of, for example, mechanical locking. The invention concerns also a vehicle equipped with an adjustable and mechanically lockable steering column according to the invention.

### THE PRIOR ART

Most vehicles today are equipped with a steering column that allows setting of the steering wheel of the vehicle at an angular position that is appropriate for the particular driver. It is important that it is easy to carry out this setting, and that it does not require large manual strength.

The behaviour of steering columns during a collision differs between cars and trucks. The steering wheel in a car normally maintains essentially its preset angle during a collision, and the steering column is instead compressed or displaced in its longitudinal direction when the driver places a load on the steering wheel or the airbag during the collision. The behaviour of the steering wheel in heavy vehicles, such as trucks, is that it is often instead displaced upwards/forwards to a condition that is essentially horizontal. This position is actually the parking position of the steering wheel, i.e. the position into which the driver places the steering wheel when the vehicle is stationary in order to obtain more space in the driver's cabin when, for example, resting, in order to facilitate getting into and out of the cabin, etc. The fact that the steering wheel is displaced upwards during a collision, however, means that the driver, if he or she is thrown forwards, will with high probability impact the steering wheel with the chest, neck or face against the steering wheel rim, which can lead to serious personal injury.

The technical difference between the steering columns in cars and in trucks is that the rotational joint of the steering column is normally located at different distances relative to the steering wheel/driver, and that the region of adjustment of the steering column must be considerably larger in trucks. It is, however, desirable that steering columns for trucks demonstrate the same behaviour as the steering columns for cars, despite other differences. This behaviour is that the steering wheel in the truck should preferably remain at its preset angular position also during a collision, while remaining simple to adjust in stepless adjustments for normal use. Fixing the preset angular position during an accident would reduce the risk of injury for the driver.

Many designs of steering column for heavy vehicles cannot withstand the loads that arise during a collision, and are displaced upwards/forwards. This behaviour is influenced by the weight of the steering wheel in combination with the fact that the rotational joint is located relatively close to the steering wheel and the driver. When the steering wheel moves upwards/forwards, the risk that the driver impacts the steering wheel in a disadvantageous manner increases. The exact manner in which the driver impacts the steering wheel depends on several factors such as the speed of the vehicle during the collision, the height of the driver, the preset position of the driver's seat, etc. Thus, the fact that the steering wheel is displaced upwards/forwards constitutes a significant problem, not least when the steering wheel is equipped with an airbag. The airbag in the steering wheel thus develops essentially upwards instead of in the direction towards the driver during a collision, and does not give the driver the intended and necessary protection. Increasing requirements for lower risks of injury in vehicles mean that it is becoming evermore difficult to satisfy these requirements without the installation and use of an airbag.

The problem is thus to construct a steering column for heavy vehicles that can be easily adjusted in stepless adjustments, but that even so remains in its preset angular position during a collision with high mechanical loads, such that the function of, for example, an airbag will be as intended.

Several attempts have previously been made to solve this problem and to suggest a steering column that offers high flexibility during the mechanical setting, in order to adjust the position and angle of the steering wheel to the wishes of a particular driver, but that at the same time retains the steering wheel at its present angular position during an accident that generates high mechanical loads against the steering wheel.

US5503431**,** for example, describes a lockable steering column, for the setting of a steering wheel in a vehicle, consisting of upper and a lower steering wheel shafts that can be displaced relative to each other. The steering column is mounted at a first bracket that can be displaced essentially horizontally relative to a second bracket mounted at the body of the vehicle. A means equipped with teeth makes it possible, after setting of the steering wheel at its desired position, to lock the setting of the steering wheel through the teeth of the means, during the locking operation, interacting with a corresponding second means, also provided with teeth. One disadvantage is that the setting will not in this case be in stepless adjustments: it must be adapted to the distribution of the teeth.

EP1070652 describes a further lockable steering column for a vehicle comprising friction locking. Also this design uses a means equipped with teeth that make it possible, during the setting of the steering wheel at the desired position, to lock the position of the steering wheel through the teeth of the means interacting with a corresponding second means, also provided with teeth. The disadvantage, once again, is that the setting will not be in stepless adjustments relative to the distribution of the teeth.

US2006/0082119 describes a further variant of a lockable steering column for a vehicle. The locking of the steering column can be opened or locked with the aid of a lever, through means equipped with teeth interacting with each other, which gives rise to the same problem as in the prior art technology: the setting takes place in stepped adjustments.

WO 91/06461 A1**,** on which the preamble of claim 1 is based, discloses an adjustable steering wheel, preferably for trucks. The steering column is on an upper supporting arm, which is pivoted in a lower supporting arm, which in turn is pivotally mounted to a windshield beam, for example in the cab. The locking device in the form of a first and a second friction plate package with an intermediate conical spring washer package locks the supporting arms relative to each other and relative to the cab.

Prior art technology, thus, cannot demonstrate a steering column for, for example, heavy commercial vehicles such as trucks that allows a setting of the steering wheel in stepless adjustments and that, when the mechanical force across the steering column reaches an upper limiting value, during, for example, an accident in which the friction between, for example, lamellae no longer is able to hold the steering column at its preset and desired condition, only then automatically and mechanically locks the steering column with the aid of shaped means, preferably equipped with teeth.

### SUMMARY OF THE INVENTION

One purpose of the invention is to solve the problems described above and to demonstrate a steering column that is easy to adjust in stepless adjustments during normal use and that primarily locks the steering wheel at a preset angular position with the aid of friction, but that, when the friction locking is no longer able to hold the steering wheel at its preset angle, for example during a collision, automatically activates a mechanical shape locking that fixes the angular position of the steering wheel.

A further purpose of the invention is that the mechanical locking is to be rapid, to function reliably, to be able to withstand heavy loads, and at the same time to require limited space for installation.

A further purpose of the invention is that the solution is to be simple in principle, and that the parts are to be simple and cost-effective to manufacture.

These and further purposes and advantages are achieved according to the invention through a steering column defined by the features that are specified in the characterising part of the independent claims 1 and 11.

Thus, the invention is intended in particular for commercial vehicles such as trucks and similar, but it can, naturally, be used also for other types of vehicle for which there is a requirement for a steering column that offers high user-friendliness with respect to setting the position of the steering wheel, but that at the same time is to be able to hold the steering wheel securely at the preset angular position when under high mechanical loads, such as, for example, during a collision.

The invention is achieved in that it is possible to lock/fix the tilt position, or the tilt angle, of the steering wheel mechanically in the event of sudden, high mechanical loads on the steering wheel. This is achieved with the aid of shaped means integrated into the lamellar package of the steering column. It is an advantage that the shaped means consist of toothed or cogged profiles arranged on carriers and on the lamellae that are normally used to lock the steering column by friction. This gives a stepless frictional locking with mechanical shape locking overlaid.

The tilt angle of the steering column is thus locked in a stepless manner at the desired position with the aid of an adjustable strut that preferably comprises a lamellar package arranged inside it. The strut and the lamellar package are mounted between the upper steering column and a slide bracket, which is in turn mounted through a main bracket in the driver's cabin of the vehicle. A shaft is mounted transversely through the slide bracket and runs in longitudinally extended slots arranged in the strut and in the lamellar package. When a pneumatic cylinder in the slide bracket is activated, the force of a compressive spring against the lamellar package is reduced, with the aid of a lever, and the frictional locking ceases such that the driver can easily adjust the steering wheel to the desired condition (position and angle) manually. The cylinder is subsequently deactivated, and the mechanical pressure against the lamellae returns with the aid of the compressive spring. The steering wheel is in this way locked at its preset condition by the friction that arises in the lamellar package.

According to the invention, at least one lamella in the lamellar package is designed with teeth/cogs at an outer edge. The teeth/cogs are arranged essentially parallel to the longitudinal slot and along at least a part of the lamella. At least one segment is designed with corresponding teeth/cogs that fit against the teeth/cogs of the lamella. The segment is fixed onto a carrier with the aid of, for example, two pins, rivets, screws, or similar. It is an advantage if the number of lamellae, carriers and segments are essentially equal to each other.

The carriers are mounted in bearings in a manner that allows rotation around washers and located between the lamellae. The washers are in turn arranged on the said shaft. All lamellae and the intermediate washers are pressed together at the strut by at least one external compressive spring, and frictional locking in the lamellar package is in this way achieved. The washers are mounted in bearings on the shaft, which actually functions as a locking screw, and they are fixed in the locked condition relative to the slide bracket. Large frictional forces arise between the lamellae, the washers and the outer surfaces of the strut when the spring force is allowed to act with its full strength and in this way fix the steering wheel at the desired tilt angle.

At least one tensile spring is placed under tension from at least one of the carriers that are equipped with a lever that is provided with holes. The tensile spring attempts to press all segments against the teeth/cogs of the lamellar profile, through the pins. Thus the teeth/cogs of the segment come into contact with the teeth/cogs of the lamellae when the frictional locking is activated, while the teeth/cogs do not necessarily penetrate into each other. Full interaction between the teeth/cogs does not arise until the strut and the lamellar package start to move in the longitudinal direction relative to the shaft, during, for example, a collision with high mechanical load.

The setting of tilt angle of the steering wheel and the length adjustment of the steering wheel take place through two pneumatic cylinders being activated through a regulator or valve that is readily accessible for the driver.

Advantages of the design according to the invention are that the same large area of adjustment in stepless adjustments is achieved as in currently used steering columns for trucks, while in addition, the desired behaviour in a collision is achieved with a steering wheel that does not rise, change its angle, during a collision. The conditions required such that the airbag of the vehicle is to function and protect the driver as intended are in this way significantly improved. The behaviour of the steering wheel in a collision will, furthermore, be the same independently of the speed of the vehicle during the collision, the height of the driver, the position of the driver's seat, etc.

A further advantage of the solution according to the invention is that its function is very reliable and requires minimum of space for installation. This makes it relatively easy and cheap to implement the new solution during the new production of vehicles.

Further features and advantages of the invention are made clear by the following, more detailed, description of the invention and by the attached drawings and other claims.

### BRIEF DESCRIPTION OF DRAWINGS

The invention is described in more detail below in some preferred embodiments with reference to the attached drawings.
**Figure 1** shows a side view of a steering column according to the invention.
**Figure 2** shows in more detail and in a perspective view the inner strut that can be displaced, comprising a lamellar package.
**Figure 3** shows a perspective view of the strut, similar to Figure 2, but where the strut is shown with one of its external sides, the one that faces the viewer, demounted such that the shapes of the lamellae and the segments are made more clear.
**Figure 4** shows from one side a freed lamella, a washer, a carrier and a segment, in the unlocked condition, i.e. in a condition in which the driver can adjust the position and angle of the steering wheel.
**Figure 5** shows the same drawing as Figure 4 from the side, but with the segment in its frictionally locked condition, i.e. in a condition in which the driver has completed the setting of the position and angle of the steering wheel.
**Figure 6** shows in a similar manner a lamella, but here in a fully locked condition that shows how the teeth/cogs of the segment interact fully with the teeth/cogs of the lamellae, for example after a collision.

### DESCRIPTION OF PREFERRED EMBODIMENTS

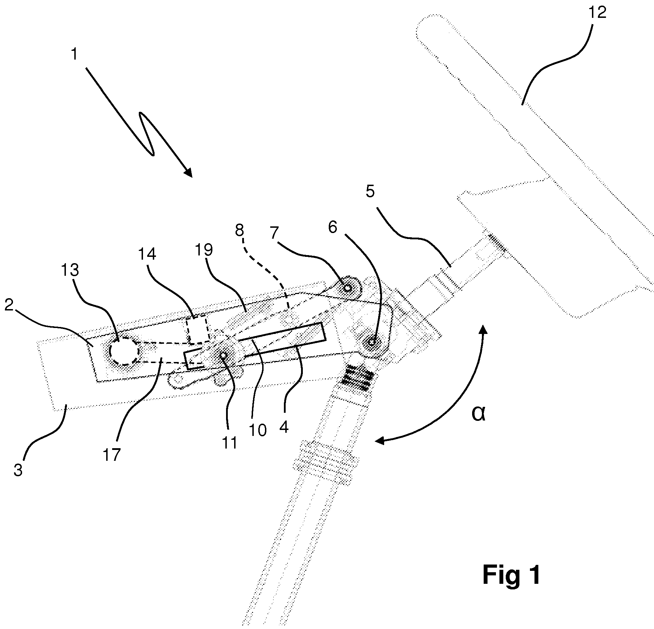

**Figure 1** shows a side view of a steering column 1 according to the invention mounted at a slide bracket 2 that is in turn mounted in a principal bracket 3 in the driver's cabin of the vehicle, in, for example, the sheet metal of the pedal and/or the transverse beam (not shown in the drawing). The principal bracket 3 is provided on its side with essentially horizontal external slots 4, through which the slide bracket 2 can be displaced forwards or backwards relative to the vehicle and the driver. In the rear part, seen in the longitudinal direction of the vehicle, of the slide bracket 2 the rotational joint 6 of the upper steering column 5 is mounted in a jointed manner.

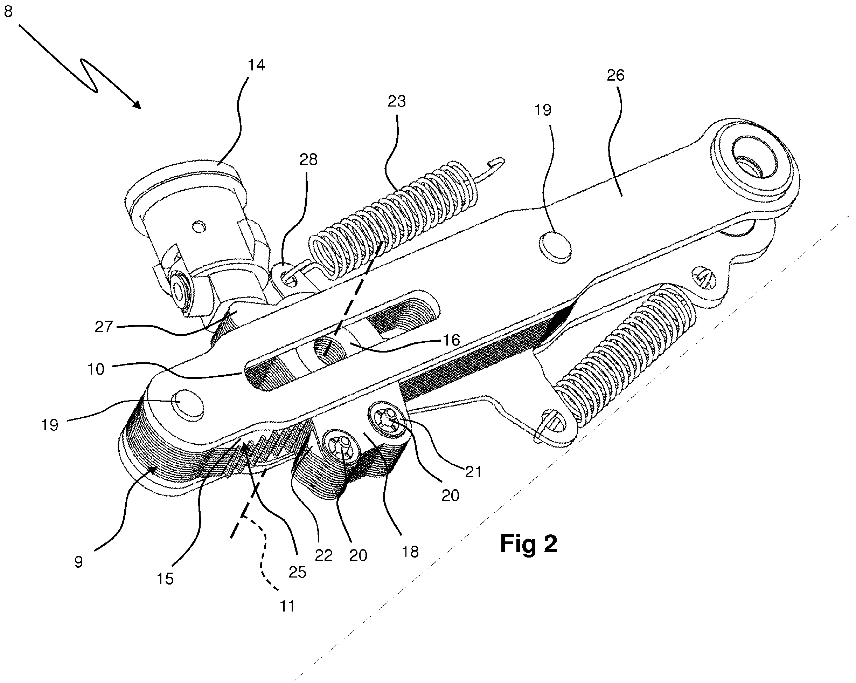

The rotational joint 6 of the steering column is further mechanically engaged, through a further joint 7 that is located at a certain distance from the rotational joint 6, to a strut 8 comprising a lamellar package 9 (see Figure 2). The strut 8 and the lamellar package 9 are both arranged with longitudinal slots 10 through which a shaft 11 is arranged transverse to the slide bracket 2. The shaft 11 is fixed arranged relative to the slide bracket 2. The same shaft 11 also runs in the slots 4 of the principal bracket.

Since the strut 8, when in the unlocked condition, can be easily displaced relative to the slide bracket 2, and since the rear end of the strut 8 is mounted at the joint 7 close to the rotational joint 6 of the steering column, the tilt angle α of the steering wheel 12 can be changed/adjusted. The tilt angle α of the steering wheel 12 is locked at stepless adjustments with the aid of the friction in the strut 8 and the lamellar package 9 that is arranged inside it.

The frictional lock of the strut 8 is activated or deactivated with the aid of pneumatic cylinders 13, 14. A compressional spring (not shown in the drawings) presses together the lamellae 15 (see Figure 2) and the washers 16 of the lamellar package 9 against each other, whereby the friction fixes the strut 8 in its longitudinal direction relative to the slide bracket 2. The preset angle α of the steering wheel is in this way locked in its condition.

When a first pneumatic cylinder 13 is activated, the compressional spring (not shown in the drawings) is somewhat compressed by a lever 17, and the friction between the lamellae 15 and the washers 16 is reduced or disappears completely.

**Figure 2** shows a perspective view of the inner displaceable part, the strut 8, of the slide bracket 2, comprising the said lamellar package 9. The lamellar package 9 consists of a number of lamellae 15 arranged to be parallel and provided with several/a number of teeth/cogs 25 at the outer edge, here the lower [**sic - shown in the drawing as the upper edge**] edge, of each lamella 15. The lamellae 15 are fixed to each other and to the strut 8 with the aid of attachment means 19.

A carrier 18 is arranged between each neighbouring pair of lamellae 15. Each carrier 18 is arranged such that it can rotate around a washer 16 arranged on the shaft 11 (the shaft 11 is here shown only as a dashed line). The thickness of the washers 16 exceeds somewhat the thickness of the carriers 18, by, as a suggestion, 0.1 mm, which means that essentially no friction arises between the carrier 18 and the neighbouring lamellae 15. The carriers 18 are mechanically engaged with each other with the aid of two attachment means 20, such as, for example, pins, rivets, screws or similar, and form a package. The pins 20 may be fixed with the aid of lock washers 21 or similar.

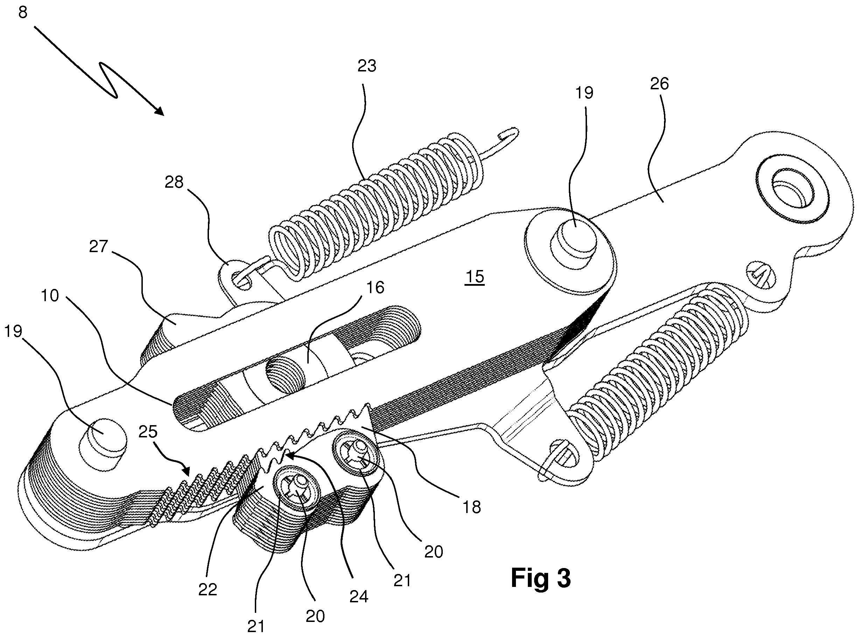

A second pneumatic cylinder 14 influences the package of carriers 18, and segments 22 that are mounted on it, to rotate against the influence of a tensile spring 23. The teeth/cogs 24 of the segments (see Figure 3) are in this way released from their contact with the teeth/cogs 25 of the lamellae.

The strut 8 can in this way be displaced in the slide bracket 2 and it is possible for the driver easily and manually to adjust the steering wheel 12. Thus, by activating the pneumatic cylinders 13, 14 arranged in the slide bracket 2 it is possible that the steering wheel 12 can be not only displaced but also tilted to the desired condition.

When the first pneumatic cylinder 13 is deactivated, the lever 17 ceases its influence against the compressional spring (not shown in the drawings) and presses together in this way the outer sides 26 of the strut 8 against the lamellae 15 and the washers 16 in the lamellar package 9. The friction between the washers 16, the lamellae 15 and the sides 26 of the strut 8 ensure that the position of the steering wheel is locked/fixed in its preset condition.

**Figure 3** shows a perspective view of the strut 8, similar to what is made clear by Figure 2, but the strut 8 is shown with one of its external sides, the one that faces the viewer, demounted such that the shapes of the lamellae 15 and the segments 22 are made more clear. Each lamella 15 is thus provided with a row of teeth/cogs 25 along one of its longitudinal edges, in this case the lower [**sic** - **shown in the drawing as the upper edge**] edge. The length of the row of teeth/cogs 25 of the lamella 15 corresponds essentially to the length of the longitudinal slot 10, but is slightly displaced relative to the slot 10, i.e. the length of the teeth/cogs 25 of the lamella corresponds essentially to the possible displacement of the strut 8, the adjustment margin of the strut 8.

The segments 22 are arranged at each carrier 18 in the region of the pins 20. These segments 22 are provided with teeth/cogs 24 directed against the teeth/cogs 25 of the lamellae and designed such that they fit into each other, with what is known as "shape fitting". Each segment 22 is in this way located in the same plane as a lamella 15 and is mechanically fixed mounted at a carrier 18 with the aid of the said pins 20. At least one spring attachment 28 to which the tensile spring 23 is arranged is arranged in the package that is formed by the carrier 18 and the segment 22. The tensile spring 23 is engaged at its second opposite end to, for example, the slide bracket (not shown in the drawings), which means that the package of carriers 18 and segments 22 is always attempting to be swivelled such that the teeth/cogs 24 of the segments 22 come into contact with the teeth/cogs 25 of the lamellae 15.

A pneumatic cylinder 14 (see Figure 2) is arranged to press against a peg 27 formed by one or several carriers 18, and can, during activation, rotate the package of carriers 18 and segments 22 to a certain degree in a direction against the influence of the tensile spring 23. When the cylinder 14 is activated, the package of carriers 18 and segments 22 is rotated such that the teeth/cogs 24 of the segments move in the direction away from the teeth/cogs 25 of the lamellae. In this way, possible mechanical locking between the segments 22 and the lamellae 15 is avoided. When the cylinder 14 is deactivated, the segments 22 are pressed by the tensile spring 23 against the lamellae 15 such that the segments 22 come into mechanical contact with the teeth/cogs 25 of the lamellae 15, without, however, necessarily entering into full interaction with these.

Thus, each segment 22 is provided with at least one tooth/cog 24, preferably a row of several, for example three, teeth/cogs 24, directed in the package by the carriers 18 and the segments 22 against the row of teeth/cogs 25 of the lamellae. Since it is possible to lock the strut 8 by friction at any stepless position at all, the teeth/cogs 24, 25 in the lamellae 15 and in the segments 22 will not enter into full interaction with each other. Instead, some of the teeth/cogs 24, 25 will be only resting against each other. The complete mechanical locking between the teeth/cogs 24, 25 is fully achieved only when the strut 8 and the lamellar package 9 start to slide relative to the shaft 11, as a result of, for example, a mechanical load that exceeds a predetermined limiting value. The package with carriers 18 and segments 22 is then somewhat rotated by the influence of the tensile spring 23, and the teeth/cogs 24, 25 engage fully with each other and mechanically lock the strut 8 relative to the shaft 11.

It is appropriate that the predetermined limiting value be determined with the aid of several different parameters. Since the steering column must be able to hold the steering wheel at its angular position during a collision, one parameter is the speed from which the vehicle is braked during the collision. The predetermined limiting value is influenced also by the weight of the steering wheel, in combination with the weight of the components that are mounted at or on the steering column. One parameter, finally, is the weight of the driver, since he or she is pressed against the steering wheel during a collision.

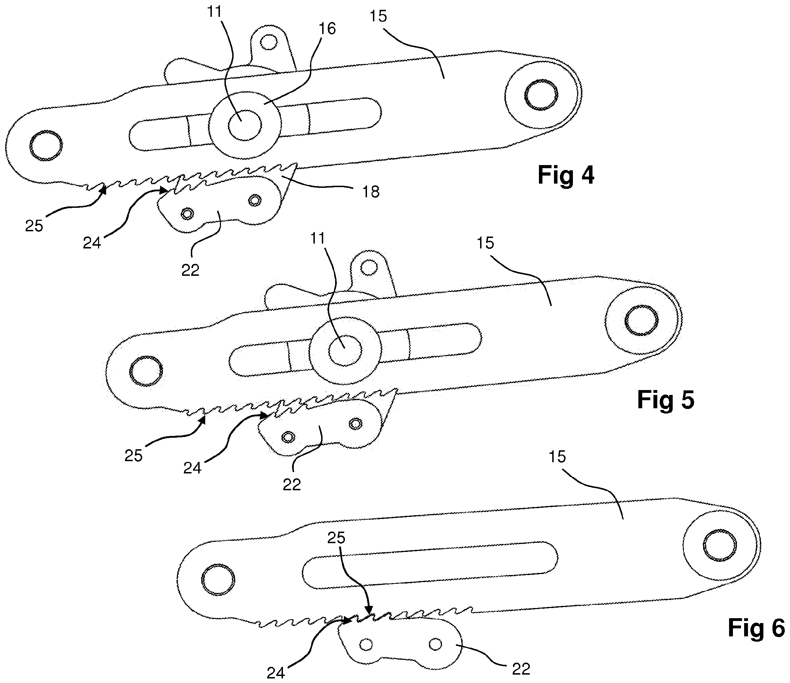

**Figure 4** shows a freed lamella 15, a washer 16, a carrier 18 and a segment 22 from the side. The teeth/cogs 24 of the segments 22 are located in the drawing at a certain distance from the teeth/cogs 25 of the lamellae 15. The strut 8 and the steering wheel 12 are completely unlocked in this condition.

**Figure 5** shows in a similar way a freed lamella 15 but with the segment 22 in its frictionally locked condition, i.e. in a condition in which the driver has completed the setting of the position and angle of the steering wheel 12. The teeth/cogs 24, 25 in the example shown here have moved to come into contact with each other essentially tip-to-tip, but are not fully engaged with each other.

**Figure 6** shows in a similar manner a freed lamella 15, but here in a condition that shows how the teeth/cogs 24 of the segment 22 interact fully with the teeth/cogs 25 of the lamellae 15. The mechanical force in the axial joint of the strut 8 has here exceeded the friction in the lamellar package 9, which has caused the strut 8 to start to move, and the teeth/cogs 24, 25 have entered into full interaction with each other with the aid of the tensile spring 23. The lamellar package 9 and the strut 8 are in this condition fully and securely locked relative to the shaft 11 and the package of carriers 18 and segments 22.

The description above is primarily intended to facilitate understanding of the invention and is, naturally, not limited to the specified embodiments: also other variants of the invention are possible and conceivable within the framework of the innovative concept and the protective scope of the attached patent claims.

## Claims

1. A steering column (1), preferably intended for the adjustment in stepless adjustment of the angular position of a steering wheel (12), in a heavy commercial vehicle such as a truck, comprising a steering column (1) in several parts and with an upper rotational joint (6), a slide bracket (2) arranged in the driver's cabin of the vehicle, and a strut (8) mounted between the slide bracket (2) and the upper rotational joint (6) with the aid of which the tilt angle (α) of the steering wheel (12) can be adjusted and locked by friction, **wherein**
- the strut (8) with its outer end is arranged jointed at the upper steering column (5), preferably close to its rotational joint (6),
- the strut (8) is arranged such that it can be displaced in the slide bracket (2),
- shaped means (24, 25) are arranged to interact with each other and to mechanically lock the strut (8) in its position relative to the slide bracket (2), and in this way also the preset angular position (α) of the steering wheel (12), when the mechanical load on the steering wheel (12) and the strut (8) exceeds a predetermined limiting value,
**characterised in**
**that** the shaped means (24, 25) are constituted by toothed profiles or cogs.

2. The steering column (1) according to claim 1,
**characterised in**
**that** the strut (8) comprises a lamellar package (9) consisting of at least one lamella (15).

3. The steering column (1) according to claim 2,
**characterised in**
**that** at least one lamella (15) in the lamellar package (9) is designed with shaped means (25).

4. The steering column (1) according to claim 2 or 3,
**characterised in**
**that** the lamella (15) is designed with an extended slot (10) through which a shaft (11) runs.

5. The steering column (1) according to anyone of claim 2-4,
**characterised in**
**that** at least one carrier (18) is arranged in the lamellar package (9), preferably between two neighbouring lamellae (15) .

6. The steering column (1) according to claim 5,
**characterised in**
**that** the carrier (18) is arranged in the lamellar package (9) such that it can be rotated around a washer (16) arranged on the said shaft (11).

7. The steering column (1) according to claim 5 or 6,
**characterised in**
**that** a segment (22), mounted on the carrier (18), is arranged with shaped means (24) arranged to fit against the shaped means (25) of the lamella (15).

8. The steering column (1) according to claim 7,
**characterised in**
**that** the carrier (22), through the influence of a tensile spring (23), attempts to be swivelled/rotated such that the shaped means (24) of the segment (22) come into contact with the shaped means (25) of the lamella (15).

9. The steering column (1) according to any one of claim 2-8,
**characterised in**
**that** the shaped means (24, 25) are integrated into the lamellar package (9) of the steering column (1).

10. A vehicle provided with a steering column (1) according to any one of claims 1-9.

## Patentansprüche

1. Lenkstange (1), vorzugsweise vorgesehen für ein stufenloses Anpassen der Winkelposition eines Lenkrads (12), in einem schweren Nutzfahrzeug, wie ein Lastkraftwagen, umfassend eine Lenkstange (1) aus mehreren Teilen und mit einem oberen Drehgelenk (6), einen Schiebebügel (2), der in der Fahrerkabine des Fahrzeugs angeordnet ist, und eine Strebe (8), die zwischen dem Schiebebügel (2) und dem oberen Drehgelenk (6) montiert ist, wobei mit deren Hilfe der Neigungswinkel (α) des Lenkrads (12) angepasst und durch Reibung fixiert werden kann, wobei
- die Strebe (8) mit deren äußeren Ende gelenkig an der oberen Lenksäule (5), vorzugsweise nahe an dessen Drehgelenk (6), angeordnet ist,
- die Strebe (8) derart angeordnet ist, dass sie in dem Schiebebügel (2) versetzt werden kann,
- geformte Mittel (24, 25) derart angeordnet sind, dass sie miteinander wechselwirken und die Strebe (8) in ihrer Position relativ zu dem Schiebebügel (2), und dadurch auch die vorgegebene Winkelposition (α) des Lenkrads (12), mechanisch zu verriegeln, wenn die mechanische Kraft auf dem Lenkrad (12) und der Strebe (8) einen vorgegebenen Grenzwert überschreitet,
**dadurch gekennzeichnet, dass**
die geformten Mittel (24, 25) durch gezahnte Profile oder Zähne gebildet sind.

2. Lenkstange (1) nach Anspruch 1,
**dadurch gekennzeichnet, dass**
die Strebe (8) ein Lamellenpaket (9) umfasst, das wenigstens eine Lamelle (15) umfasst.

3. Lenkstange (1) nach Anspruch 2,
**dadurch gekennzeichnet, dass**
wenigstens eine Lamelle (15) in dem Lamellenpaket (9) mit geformten Mitteln (25) ausgestaltet ist.

4. Lenkstange (1) nach Anspruch 2 oder 3,
**dadurch gekennzeichnet, dass**
die Lamelle (15) mit einem länglichen Schlitz (10) ausgestaltet ist, durch den sich ein Schaft (11) erstreckt.

5. Lenkstange (1) nach einem der Ansprüche 2 bis 4,
**dadurch gekennzeichnet, dass**
wenigstens ein Träger (18) in dem Lamellenpaket (9) angeordnet ist, vorzugsweise zwischen zwei benachbarten Lamellen (15).

6. Lenkstange (1) nach Anspruch 5,
**dadurch gekennzeichnet, dass**
der Träger (18) derart in dem Lamellenpaket (9) angeordnet ist, dass er um eine Scheibe (16) gedreht werden kann, die auf dem Schaft (11) angeordnet ist.

7. Lenkstange (1) nach einem der Ansprüche 5 oder 6,
**dadurch gekennzeichnet, dass**
ein Segment (22), das auf dem Träger (18) montiert ist, mit geformten Mitteln (24) ausgestaltet ist, die dazu eingerichtet sind, mit den geformten Mitteln (25) der Lamelle (15) zusammenzupassen.

8. Lenkstange (1) nach Anspruch 7,
**dadurch gekennzeichnet, dass**
der Träger (22), durch Einfluss einer spannbaren Feder (23), versucht, gedreht/rotiert zu werden, sodass die geformten Mittel (24) des Segments (22) mit den geformten Mitteln (25) der Lamelle (15) in Kontakt kommen.

9. Lenkstange (1) nach einem der Ansprüche 2 bis 8,
**dadurch gekennzeichnet, dass**
die geformten Mittel (24, 25) in das Lamellenpaket (9) der Lenkstange (1) integriert sind.

10. Fahrzeug, das mit einer Lenkstange (1) nach einem der Ansprüche 1 bis 9 ausgestattet ist.

## Revendications

1. Colonne de direction (1), de préférence destinée au réglage en continu de la position angulaire d'un volant (12), dans un véhicule utilitaire lourd tel qu'un camion, comprenant une colonne de direction (1) en plusieurs parties et une articulation de rotation supérieure (6), un support coulissant (2) disposé dans la cabine de conduite du véhicule et une jambe de force (8) montée entre le support coulissant (2) et l'articulation de rotation supérieure (6) à l'aide de laquelle l'angle d'inclinaison (a) du volant (12) peut être réglé et verrouillé par frottement,
dans lequel
- la jambe de force (8) avec son extrémité extérieure est agencée de manière articulée au niveau de la colonne de direction supérieure (5), de préférence à proximité de son articulation de rotation (6),
- la jambe de force (8) est agencée de manière à pouvoir être déplacée dans le support coulissant (2),
- ses moyens profilés (24, 25) sont agencés pour interagir les uns avec les autres et pour verrouiller mécaniquement la jambe de force (8) dans sa position par rapport au support coulissant (2), et ainsi également la position angulaire préréglée (a) du volant (12), lorsque la charge mécanique exercée sur le volant (12) et la jambe de force (8) dépasse une valeur limite prédéterminée.
**caractérisé en ce**
les moyens profilés (24, 25) sont constitués par des profils dentés ou des engrenages.

2. Colonne de direction (1) selon la revendication 1,
**caractérisé en ce**
la jambe de force (8) comprend un sous-ensemble lamellaire (9) constitué d'au moins une lamelle (15).

3. Colonne de direction (1) selon la revendication 2,
**caractérisé en ce**
au moins une lamelle (15) dans le sous-ensemble lamellaire (9) est conçu avec des moyens profilés (25).

4. Colonne de direction (1) selon la revendication 2 ou 3,
**caractérisé en ce**
la lamelle (15) est conçue avec une fente allongée (10) à travers laquelle passe un arbre (11).

5. Colonne de direction (1) selon l'une quelconque des revendications 2 à 4,
**caractérisé en ce**
au moins un support (18) est disposé dans le sous-ensemble lamellaire (9), de préférence entre deux lamelles voisines (15) .

6. Colonne de direction (1) selon la revendication 5,
**caractérisée en ce**
**que** le support (18) est agencé dans le sous-ensemble lamellaire (9) de manière à pouvoir tourner autour d'une rondelle (16) disposée sur ledit arbre (11).

7. Colonne de direction (1) selon la revendication 5 ou 6,
**caractérisée en ce**
**qu'**un segment (22), monté sur le support (18), est agencé avec des moyens profilés (24) agencés pour s'ajuster contre les moyens profilés (25) de la lamelle (15).

8. Colonne de direction (1) selon la revendication 7,
**caractérisée en ce**
**que** le support (22), par l'influence d'un ressort de traction (23), tente d'être pivoté/mis en rotation de sorte que les moyens profilés (24) du segment (22) entrent en contact avec les moyens profilés (25) de la lamelle (15).

9. Colonne de direction (1) selon l'une quelconque des revendications 2 à 8,
**caractérisée en ce**
**que** les moyens profilés (24, 25) sont intégrés dans le sous-ensemble lamellaire (9) de la colonne de direction (1).

10. Véhicule pourvu d'une colonne de direction (1) selon l'une quelconque des revendications 1 à 9.
